# EUROPEAN PATENT APPLICATION

(11) **EP 1 005 243 A1**
(43) Date of publication of application: **31.05.2000**
(21) Application number: 98122277.1
(22) Date of filing: 24.11.1998
(51) Int. Cl.: H04Q 7/38

(54) **Access method for mobile telecommunication system**

(71) Applicant: TELEFONAKTIEBOLAGET LM ERICSSON (publ), 126 25 Stockholm (SE)
(72) Inventor: Meyer, Michael, 52062 Aachen (DE)
(74) Representative: Mohsler, Gabriele

(57) **Abstract**

The present invention relates to an access method for mobile telecommunication systems comprising the following steps:
providing a logical access control channel between a mobile station and a base station,
sending a channel request signal on said logical access control channel from the mobile station to the base station,
mapping said logical access control channel onto at least one physical channel, which has a multi-frame structure consisting of a plurality of frames,
   wherein said plurality of frames is divided into several radio blocks comprising a predetermined number of time slots and providing a linking state flag (USF) in radio blocks in the downlink direction which indicates that the following group of time slots (TS) in the uplink direction are access time slots used for access bursts,
selecting the access bursts in a random access procedure,
   wherein a first portion of said access time slots is reversed exclusively for priority applications with strict delay requirements and a second portion of said access time slots is reserved for all applications.

## Description

The invention relates to an access method for a mobile telecommunication system, and in particular for a global system for mobile communication that provides a packet-switched network service such as the General Packet Radio Service (GPRS).

The Global System for Mobile Telecommunication (GSM) is designed as an international digital cellular service. GSM uses combined time division multiple access (TDMA) and frequency division multiple access (FDMA) duplex for access. GSM has been adapted to work at 1800 MHz for the personal communications networks (PCN) in Europe and at 1900 MHz for personal communication services (PCS) in the United States. The GSM standard specifies the frequency bands of 890 to 915 MHz for the up-link band and 935 to 960 MHz for the downlink band, with each band divided into 200 kHz channels. The GSM network consists of mobile stations, a base station subsystem (BSS), a network subsystem and air interfaces. The mobile station (MS) has a radio transceiver, display and digital signal processors, and a smart card called the subscriber identity module (SIM). The identity of the handheld mobile station device is not linked to the handset, but to the SIM. The SIM provides mobility so that the subscriber can have access to all services regardless of the location. The BSS consists of two parts, namely the base transceiver station (BTS) and the base station controller (BSC). The BTS contains the radio transceivers that define a cell and handles the radio-link protocols with the mobile stations. The BSC provides the connection between the mobile stations and the mobile service-switching centre (MSC). It manages the radio resources for the BTS/MS handling such functions as radio-channel set-up, frequency hopping and hand-offs. The BSC also translates the 13 KBPS voice channels used over the radio link to the standard 64-KPBS channel used by the land-based public switched telephone network (PSTN) or the integrated service digital network (ISDN). The main part of the network subsystem is the MSC. The MSC provides a connection to the public network and signalling between various network elements. The MSC contains no information about particular mobile stations. This information is stored in two location registers, which are essentially databases. The home location of the register (HLR) and the visitor location register (VLR) together with the MSC provide the call routing and rooming capabilities of GSM.

Since radio spectrum is a limited resource shared by all users, the bandwidth must be divided up among as many users as possible. The method for dividing up the bandwidth used by GSM is a combination of time and frequency division multiple access.

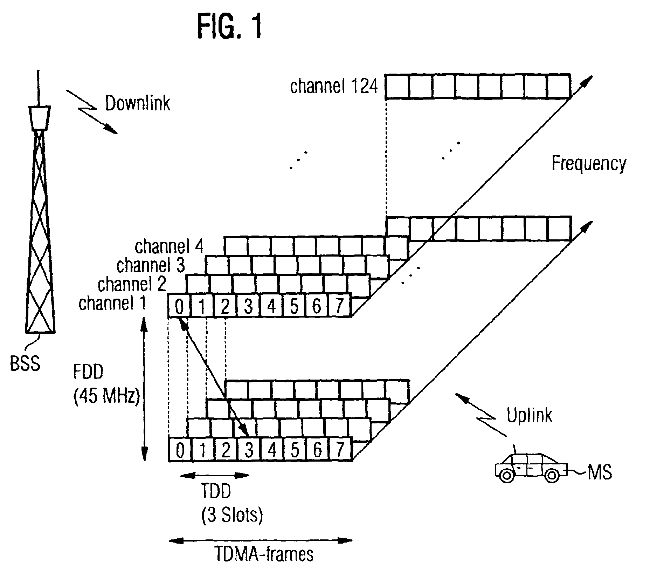

The FDMA part involves the division by frequency of the total 25-MHz bandwidth on 125 carriers of 200 kHz bandwidth as can be seen from Fig. 1. One or more carrier frequencies are then assigned to each base station. Each of these carrier frequencies is then divided in time, using a TDMA scheme, into eight time slots. Eight time slots form, for instance, a TDMA frame. One time slot is used for transmission by the mobile station MS and one for the reception. The time slots are then separated in time so that the mobile station does not receive and transmit at the same time.

Within the framework of TDMA, two types of logical channels are provided, i.e. traffic channels (TCH) and control channels (CCH). Traffic channels TCH carry voice and data between users, while the control channels CCH carry information that is used by the network for supervision and management. Among control channels CCH are a random access channel (RACH) which is used to request access to the network and an access grant channel (AGCH) for sending an assignment signal from the BSS to the mobile station MS and informing the mobile station MS that a traffic channel TCH has been assigned to it.

There are four categories of logical control channels CCH used by GSM, known as the broadcast control channel (BCCH), the common control channel (CCCH), the stand-alone dedicated control channel (SDCCH) and the associated control channel (ACCH). The broadcast control channel BCCH transmits unidirectionally information from the BSS to the mobile station MS, wherein said information is needed by the mobile station for the communication. The random access control channel RACH and the access grant channel AGCH are also unidirectional, wherein on the random access channel RACH a random access signal is transmitted from the mobile station MS to the base station BS, while on the access grant channel AGCH an assignment signal is sent from the BSS to the mobile station MS.

A physical channel in a time division multiple access TDMA system is defined as a time slot (TS) with a time slot number (TN) in a sequence of the TDMA frames. The GSM system, however, deploys TDMA combined with frequency hopping (FH) and, hence, the physical channel in GSM is partitioned in both time and frequency. Consequently, the physical channel is defined as a sequence of radio frequency channels and time slots. Each carrier frequency supports eight physical channels mapped onto eight time slots within a TDMA frame, as can be seen from Fig. 1.

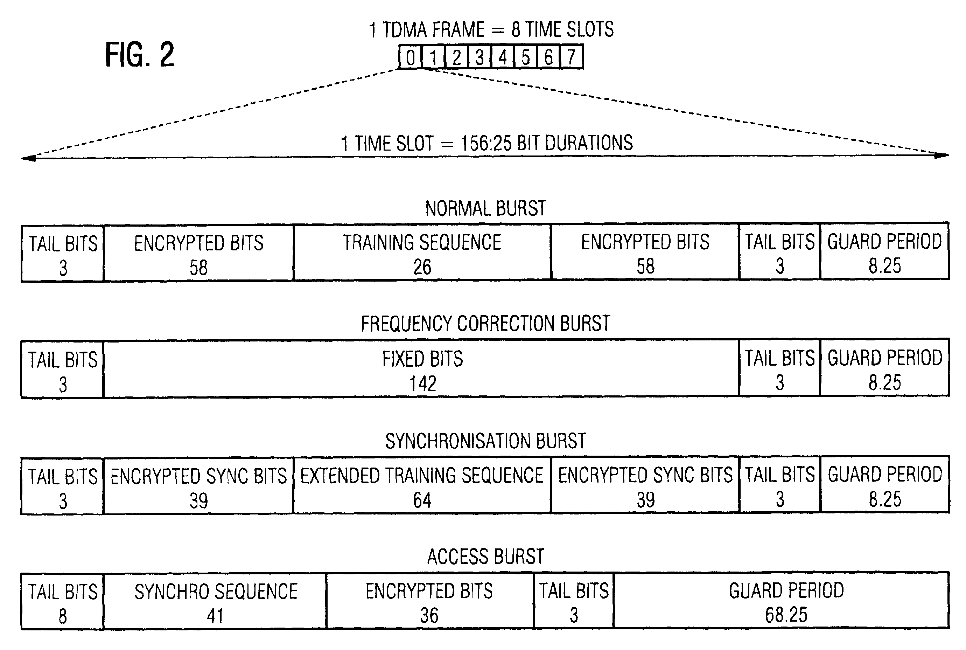

As can be seen from Fig. 2, each TDMA frame has eight time slots. During each time slot, information like voice- or data signals can be transmitted in information packets with a predetermined structure. There are substantially five different types of these so-called bursts, as can be seen from Fig. 2. For data transmission, a so-called normal burst is used comprising two sequencies of encrypted data bits. In the frequency correction burst, all bits are zero, giving with the GSMK-modulation a pure sinus which can be used for frequency correction. The synchronisation burst has a long training sequence for time synchronisation.

The access burst shown in Fig. 2 is the first signal sent from the mobile station MS to the base station. Signals arriving at the base station from close mobile stations and from mobile stations which are far away have to reach the base station in a correct time relation to avoid overlapping of the bursts. Accordingly, the access burst has a long guard period of 68,25 bit corresponding to a period of 252 µs in which the burst has to travel a distance of 76 km which is approximately double the size of a network cell.

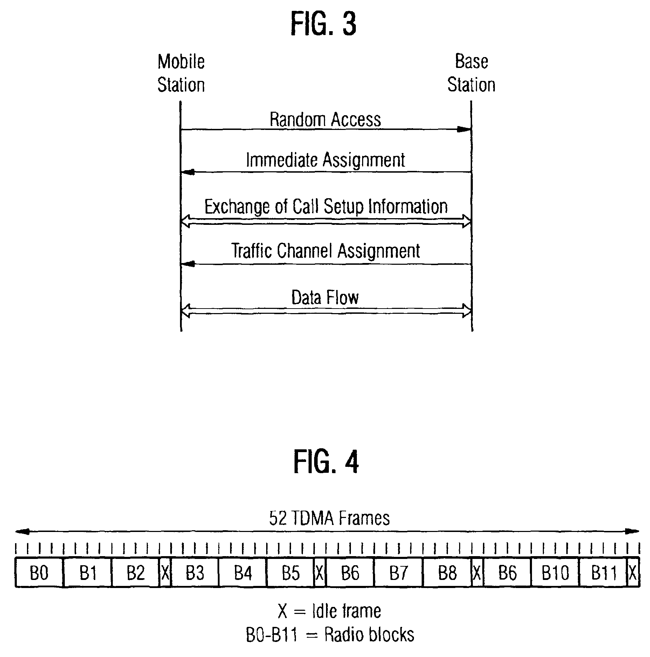

Fig. 3 shows the call establishment between mobile station MS and a base station. The mobile station MS initiates the call establishment procedure by transmitting a request on the random access control channel RACH. Since this RACH is shared by all users in range of the base station, a random access protocol, like the ALOHA protocol, has to be employed to resolve possible collisions. Once the BSS has received the request of the mobile station MS, it responds with an immediate assignment message on the access grant control channel AGCH that directs the mobile station MS to tune to a dedicated control channel for the ensuing call set-up. Upon completion of the call set-up negotiation, a logical traffic channel TCH is assigned by the base station BS and all future communication takes place on said logical traffic channel TCH.

A new transmission capability for GSM that will be especially useful for data traffic is the so-called general packet radio service (GPRS). GPRS will provide fast call set up times so that data users will not have to wait for the phone to dial, as they do with circuit switched call. GPRS will handle rates from 14 Kbps, using just one TDMA slot, up to 100 Kbps and more, using all eight TDMA slots.

A problem with the conventional random access procedure within GPRS resides in that it does not support priorities of applications with different delay requirements. On the other hand, the standard foresees four different qualities of services QoS classes for data transfer. For mobile originated traffic this means that data packets with a guaranteed QoS are serviced first, if they had the chance to ask for resources.

In the case of applications, which have strict delay requirements, the first bottleneck for the mobile originated traffic is this conventional random access procedure. There is a competition between all requests regardless of their requirements or priorities. In heavy traffic situations, this might lead to the situation that delays due to collisions occur which are not tolerable.

In view of the foregoing the main object of the present invention is to provide and improve the access method for mobile telecommunication systems and support applications with special delay requirements.

This object is reached by an access method for mobile telecommunication systems comprising the following steps:
Providing a logical access control channel between a mobile station and a base station,
sending a channel request signal on said logical access control channel from the mobile station to the base station,
mapping said logical access control channel onto at least one physical channel, which has a multi-frame structure consisting of a plurality of frames,
   wherein said plurality of frames is divided into several radio blocks comprising a predetermined number of time slots and providing a linking state flag (USF) in radio blocks in the downlink direction which indicates that the following group of time slots (TS) in the uplink direction are access time slots used for access bursts,
selecting the access bursts in a random access procedure,
   wherein a first portion of said access time slots is reversed exclusively for priority applications with strict delay requirements and a second portion of said access time slots is reserved for all applications.

Preferred embodiments of the access method according to the present invention are claimed by the subclaims.

The foregoing and other objects, features, aspects and advantages of the present invention will become more apparent from the following detailed description of the present invention when taken in conjunction with the accompanying figures.
Fig.1 is a diagram illustrating the combined TDMA and FDMA in a conventional GSM-system.
Fig.2 shows different types of bursts used in a GSM.
Fig.3 is a diagram illustrating the call establishment between a mobile station and a base station.
Fig.4 shows the 52-multiframe structure of a physical channel within GPRS.
Fig.5 shows the structure of a radio block within the multiframe structure of Fig.4.
Fig.6 is a diagram illustrating a first embodiment of the present invention.
Fig.7 is a diagram illustrating a second embodiment of the present invention.
Fig.8 is a diagram illustrating a third embodiment of the present invention.

In the following, the present invention is described with respect to Fig. 4 to 8.

Fig. 4 shows the multi-frame structure of a physical channel PDCH, wherein the sharing of the physical channel is based on blocks of four consecutive bursts. Here, 52 TDMA-frames for GPRS are shown, by means of example. The mapping in frequency PDCH onto the physical channel is defined in GSM05.02. The mapping in time of the logical channels is defined by a multi-frame structure as can be seen in Fig. 4. The multi-frame structure of PDCH consists of 52 TDMA frames divided into 12 blocks (of four frames) and four idle frames.

The cell supporting GPRS may allocate resources on one of several physical channels in order to support the GPRS traffic. Those physical channels, i.e. PDCHs, shared by the GPRS mobile stations are taken from the common pool of physical channels available in the cell. The allocation of physical channels to circuit switched services and GPRS is done dynamically according to the capacity on demand principles.

Common control signalling required by GPRS in the initial phase of packet transfer is conveyed on a packet common control channel (PCCCH), when allocated, or on a common control channel CCCH. This allows the operator to have capacity allocated specifically to GPRS in the cell only when a packet is to be transferred.

At least one PDCH, acting as a master, accommodates packet common control channels that carry all the necessary control signalling for initiating packet transfer, i.e. PCCCH, whenever said signalling is not carried by the existing CCCH, as well as user data and dedicated signalling, i.e. PDTCH and PACCH. Other PDCHs, acting as slaves, are used for user data transfer and for dedicated signalling.

The GPRS does not require permanently allocated PDCHs. The allocation of capacity for GPRS can be based on the needs for actual packet transfers. The operator can as well decide to dedicate permanently or temporarily some physical resources, i.e. PDCHs, for the GPRS traffic. When the PDCHs are congested due to the GPRS traffic load and more resources are available in the cell, the network can allocate more physical channels as PDCHs. On an up-link PDCH that contains PCCCH, all blocks in the multi-frame can be used as PRACH, PDTCH or PACCH. The use of a PRACH is indicated by an up-link state flag USF, as USF = free.

In the mobile originated packet transfer, the up-link access of the MS to the BSS is initiated by the MS by making a packet channel request on PRACH or RACH. Once the BSS has received the request of the MS, it responds with an immediate assignment message on the PAGCH or AGCH, respectively.

The packet immediate assignment message includes the list of PACCHs and the corresponding up-link state flag value per PDCH. The mobile station MS monitors the USFs on the allocated PDCHs and transmits radio blocks during the next up-link on those PDCHs, which currently bear the USF value, reserved for the usage of the mobile station. By altering the state of USF, different radio blocks on a dedicated PDCH can be allocated dynamically for certain mobile stations thus providing a flexible reservation mechanism.

The packet channel request message on the PRACH coded in a packet channel request message contains information of the type of channel needed and the number of needed radio blocks, when a PDCH is requested. The packet channel request message is coded either for the existing length of the access burst, i.e. 8 bits, and for an extended length of 11 bits.

The packet channel request is specified in GSM 04.60

The mobile station MS sends a packet channel request in one of four bursts on the radio block used for PRACH. In the access, the burst is selected randomly.

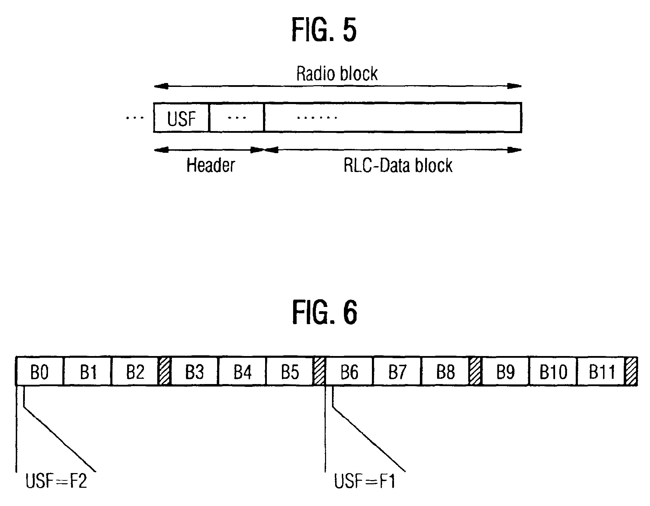

Fig. 5 shows the structure of a radio block B0 to B11 of a multi-frame structure as shown in Fig. 4. Each radio block comprises the header section and an RLC-data block. The header section includes an up-link state flag USF. When the SDCCH coding scheme is used, the USF comprises 3 bits at the beginning of each radio block that is sent on the downlink. It enables the coding of 8 different USF states, which are used to multiplex the up-link traffic.

On PCCH, one USF value is used to denote PRACH (USF = free). The other USF values (USF = R1 to R7) are used to reserve the up-link for different mobile stations. On PDCHs not carrying PCCCH, the 8 USF values (USF = R1 to R8) are used to reserve the up-link for different mobile stations thus preventing collision on the up-link channel. In this case, the USF points to the next up-link radio block comprising four bursts. The mobile station MS sends the packet channel request in one of the four bursts of the radio block used for PRACH.

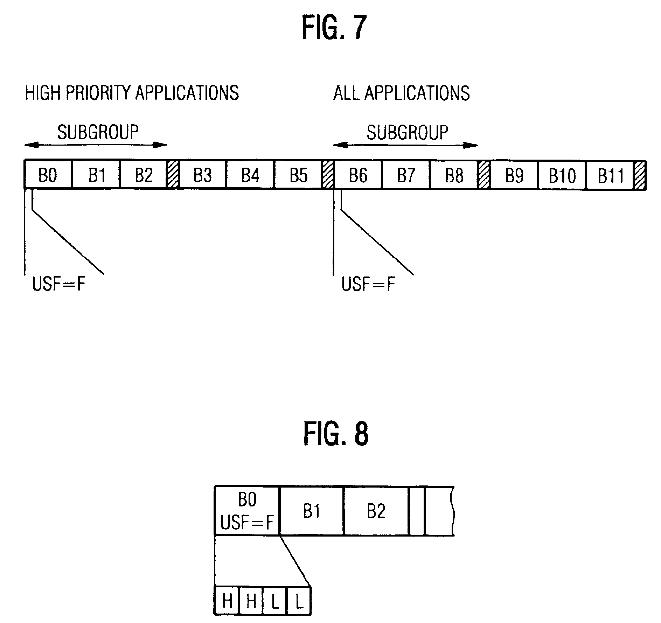

Fig. 6 illustrates a first embodiment of the access method according to the present invention. Besides a first up-link state flag value F1, at least a further second up-link state flag value F2 is provided. The second up-link state flag value F2 is reserved exclusively for applications with strict delay requirements and therefore high priority. Only applications with strict delay requirements and high priority are allowed to use the access time slots of the radio block indicated by the up-link state flag F2. The first up-link state flag F1 indicates that the access time slots of the radio block can be used by all applications, i.e. applications with strict delay requirements, and by other applications with a lower delay requirement as well. As can be seen from the example shown in Fig. 6, the first radio block B0 has an up-link state flag set to the second up-link state flag value F2 indicating that the time slots of this block is exclusively reserved for applications with strict delay requirements having a high priority. In contrast, the radio block B6 shown in Fig. 6 has its up-link state flag set to the up-link state flag value F1 indicating that the access time slots can be used by all applications including applications of high and low priority. Fig. 7 illustrates a second embodiment of the access method according to the present invention. In this embodiment, the base station BS transmits on a logical control broadcast channel, e.g. PBCCH, a subgroup-specifying signal. The subgroup-specifying signal specifies a first subgroup within one or several multi-frames to be used for random access of applications with high priority and another subgroup of radio blocks to be used for random access of all applications including applications with high and low priority. A subgroup may, for instance, consist of one block between idle frames with multi-frame structure of 52 TDMA-frames of PDCH. The subgroup-specifying signal specifies a subgroup of radio blocks within the multi-frames and indicates that the access time slots of the subgroup are reserved for applications with a certain priority.

It is possible to define two priority levels, i.e. a high and a low priority, or to define more priorities depending on the delay requirements of the applications.

Fig. 8 illustrates a third embodiment of the access method according to the present invention. The base station transmits on a logical control broadcast channel, e.g. PBCCH, to the mobile station MS an access slot number specifying signal which indicates that a predetermined number of access time slots following the linking state flag USF are reserved for applications with high priority. The up-link state flag USF in the example shown in Fig. 8 is followed by four time slots which can be used for access bursts. The BSS transmits that two out of four time slots of the radio block B0 are reserved exclusively for applications with high priority indicated by H in Fig. 8. The two remaining access time slots can be used by all applications including applications with a low priority indicated as L in Fig. 8.

The embodiments shown in Fig. 7, 8 have the advantage that the USF-mechanism of a conventional GPRS does not have to be changed.

In the embodiment shown in Fig. 6 using different up-link state flag values F1, F2 to indicate different priorities the USF mechanism has to be changed, but there is the advantage that no information on PBCCH has to be transmitted specifying a subgroup of blocks to be used for a high priority random access or specifying a predetermined number of access time slots to be used for random access within a radio block.

In all embodiments shown in Fig. 6 to 8 by increasing the portion of access time slots reserved exclusively for high priority applications with strict delay requirements, the probability that a packet data traffic channel PDTCH is assigned to an application with a strict delay requirement having a high priority is rapidly increased, and therefore the probability that a delay occurs due to collisions during the random access procedure which causes that a delay requirement is not met is extremely reduced. Therefore, the problems of a conventional random access procedure are avoided.

An application with strict delay requirements is for example traffic control, especially train control. In such an application, frequent data packets have to reach their destination within a certain time period. Thus the use of the access method according to the present invention in traffic control is also claimed.

An other application with strict delay requirements is for example remote supervision- and/or control. Thus the use of the access method according to the present invention in this application is also claimed.

The method according to the present invention can be applied to any mobile telecommunication system, which uses packet reservation multiple access (PRMA), and similar methods.

In particular, the method according to the present invention can be applied to the global system for mobile communication GSM that uses packet-switched network services such as the general packet radio service GPRS.

The access method for mobile telecommunication according to the present invention can also be applied to a universal mobile telecommunication system UMTS.

In a preferred embodiment of the access method according to the present invention, the priority of random access can be tied to certain quality of service classes, e.g. high priority random access for quality of service class 1.

The access method for mobile telecommunication systems according to the present invention introduces priorities for the random access procedure to avoid collisions of random access from applications with high delay requirements having a high priority with applications which need only best effort services. The present invention applies mainly for GPRS, but can be transferred to other systems like UMTS as well.

### Abbreviation list

- ACCH: associated control channel
- AGCH: access grant channel
- BCCH: broadcast control channel
- BCS: the base station controller
- BSS: base station subsystem
- BTS: base transceiver station
- CCH: control channels
- CCCH: common control channel
- FDMA: frequency division multiple access
- FH: frequency hopping
- GPRS: general packet radio service
- GSM: global system for mobile communication
- GSMK: Gaussian Minimum Shift Keying
- HLR: home location of the register
- ISDN: integrated service digital network
- MS: mobile station
- MSC: mobile service switching centre
- PACCH: packet associated control channel
- PAGCH: packet access grant channel
- PBCCH: packet broadcast control channel
- PCCH: packet control channel
- PCCCH: packet common control channel
- PCN: personal communications networks
- PCS: personal communication services
- PDCH: packet data channel
- PDTCH: packet data traffic channel
- PRACH: packet random access channel
- PRMA: packet reservation multiple access
- PTSN: public switched telephone network
- QoS: quality of standards
- RACH: random access channel
- SDCCH: stand-alone dedicated control channel
- SIM: subscriber identity module
- TCH: traffic channels
- TDMA: time division multiple access
- TN: Slot number
- TS: time slot
- UMTS: universal mobile telecommunication system
- USF: linking state flag
- VLR: visitor location register

## Claims

1. Access method for mobile telecommunication system comprising the following steps:
(a) providing a logical access control channel between a mobile station (MS) and a base station (BS),
(b) sending a channel request signal on said logical access control from the mobile station (MS) to the base station (BS),
(c) mapping said logical access control channel onto at least one physical channel which has a multi-frame structure consisting of a plurality of frames, wherein said plurality of frames is divided into several radio blocks (B) comprising a predetermined number of time slots (TS),
(d) providing a linking state flag (USF) in radio blocks in the downlink direction which indicates that the following group of time slots (TS) in the uplink direction are access time slots used for access bursts,
(e) selecting the access bursts in a random access procedure,
wherein a first portion of said access time slots is reserved exclusively for high priority applications with strict delay requirements and a second portion of said access time slots is used by all applications.

2. The access method according to claim 1 further comprising the step that the base station (BS) sends an assignment signal to the selected mobile station (MS) on a logical access grant channel,
wherein the assignment signal directs the selected mobile station (MS) to tune to a dedicated logical control channel on which call set-up information is exchanged.

3. The access method according to claim 2,
wherein after completion of the call set-up information exchange the base station (BS) assigns to the selected mobile station (MS) a logical traffic channel on which data communication takes place.

4. The access method according to claims 1 to 3, characterised in that said linking state flag (USF) comprises at least two flag values (F1, F2), wherein one of said flag values indicates that the access time slots of the associated block (B) are reserved for said high priority applications.

5. The access method according to claims 1 to 3, characterised in that the base station subsystem (BSS) transmits on a logical broadcast control channel to the mobile station (MS) a subgroup specifying signal specifying a subgroup of radio blocks B within the multi-frames and indicating that the access time slots of said subgroup are reserved for said high priority applications.

6. The access method according to claims 1 to 3, characterised in that the base station subsystem (BSS) transmits on a logical broadcast control channel to the mobile station (MS) an access slot number specifying signal which indicates that a predetermined number of said group of access time slots following said linking state flag (USF) are reserved for said high priority applications.

7. The access method according to claims 1 to 6, characterised in that the physical channel has a multi-frame structure consisting of 52 time division multiple access TDMA frames divided into 12 radio blocks (B0-B11) of four TDMA frames and four idle frames.

8. The access method according to claim 7, characterised in that each TDMA frame comprises eight time slots (TS) wherein during each time slot a burst signal is transmittable.

9. The access method according to claims 1 to 8, characterised in that the group of time slots following said linking state flag (USF) used for access bursts comprises four access time slots.

10. The access method according to claims 1 to 9, characterised in that the mobile communication system is a global system for mobile communication (GSM) that uses packet-switched network services.

11. The access method according to claim 10, characterised in that the packet-switched network service is the General Packet Radio Service (GPRS) transmitting data according to the X.25-standard.

12. The access method according to claims 1 to 9, characterised in that the mobile telecommunication system is a universal mobile telecommunication system (UMTS).

13. The access method according to claims 1 to 12, characterised in that the reservation of said first portion of access time slots for high priority applications is carried out only for certain quality of service classes (QoS).

14. Use of the access method according to claims 1 to 13 for traffic control, especially train control.

15. Use of the access method according to claims 1 to 13 for remote supervision and/or remote control.
